(19) **Europäisches Patentamt / European Patent Office / Office européen des brevets**

(11) **EP 4 621 015 A1**

(12) **EUROPEAN PATENT APPLICATION**
published in accordance with Art. 153(4) EPC

(43) Date of publication:
**24.09.2025 Bulletin 2025/39**

(21) Application number: **23891578.9**

(22) Date of filing: **14.11.2023**

(51) International Patent Classification (IPC):
*C09D 5/00* [(2006.01)]    *C09D 123/28* [(2006.01)]
*C09D 123/30* [(2006.01)]   *C09D 133/00* [(2006.01)]

(52) Cooperative Patent Classification (CPC):
**C09D 5/00; C09D 123/28; C09D 123/30;
C09D 133/00**

(86) International application number:
**PCT/JP2023/040932**

(87) International publication number:
**WO 2024/106431 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.11.2022 JP 2022185021**

(71) Applicant: **TOYOBO MC Corporation
Osaka 530-0001 (JP)**

(72) Inventors:
• **YAMASAKI, Hokuto**
  **Takasago-shi, Hyogo 676-0082 (JP)**
• **KASHIHARA, Kenji**
  **Takasago-shi, Hyogo 676-0082 (JP)**

(74) Representative: **Vossius & Partner
Patentanwälte Rechtsanwälte mbB
Siebertstrasse 3
81675 München (DE)**

(54) **POLYOLEFIN-BASED COATING MATERIAL COMPOSITION AND PRIMER COATING MATERIAL**

(57)    The present invention provides a paint composition that has good adhesion and good storage stability, and be capable of forming a coating film having excellent resistance to high-pressure car washing, chemical resistance, and oil immersion resistance on a polyolefin resin substrate. Specifically, the present invention provides a paint composition comprising a modified polyolefin (A) and a (meth)acrylic resin (B), the modified polyolefin (A) having a glass transition temperature of -30°C or higher, the (meth)acrylic resin (B) comprising a polymer of a radically polymerizable compound (b1), and the radically polymerizable compound (b1) comprising polyfunctional (meth)acrylate, the (meth)acrylic resin (B) having a glass transition temperature of 0°C or higher, and the (meth)acrylic resin (B) having a hydroxyl value of 5 to 150 mgKOH/g.

**Description**

Technical Field

The present invention relates to a polyolefin-based paint composition and a primer paint.

Background Art

Resin materials, such as polyolefins and ABS, are used in a wide range of applications because of their light weight and excellent performance. Particularly for automotive applications, resin substrates, such as polyolefins and ABS, are becoming widespread in order to reduce the weight of vehicle bodies for energy saving. These resin substrates are often coated on their surfaces for the purpose of decoration and protection. When applying the coating, a primer paint is applied in advance to improve adhesion between the topcoat coating film and the resin substrate. However, as polyolefins are generally non-polar and have poor adhesion to coating films, primers using modified polyolefin resins, which have excellent adhesion, have been used particularly for automotive exterior parts.

In recent years, the use of high-temperature, high-pressure hot water for car washing and snow removal has become more common. There is an increasing demand for coating films that do not peel off when sprayed with hot water at higher pressures and temperatures than before, and there is a demand for paints that have excellent resistance to high-pressure car washing on polyolefin substrates.

In response to this, the applicant has proposed, in PTL 1, a paint composition comprising a modified polyolefin resin with a glass transition temperature of -30°C or higher and a specific acrylic resin. The paint composition comprising such a modified polyolefin resin and a specific acrylic resin has chemical resistance and resistance to high-pressure car washing on polyolefin substrates, and the paint has excellent storage stability.

Furthermore, polyolefin substrates have excellent heat aging resistance and weather resistance, and are being used in a wider range of applications as alternatives to polar rubber etc. that have been used in rubber components. In particular, since many parts used in automotive applications are used in contact with lubricating oil, hydraulic oil, grease, and gasoline, oil immersion resistance is one of the required characteristics of paints applied to them.

Paints using modified polyolefin resins with excellent adhesion are composed of hydrocarbons and are non-polar, and it is thus difficult to achieve satisfactory oil immersion resistance. For this reason, there is a need for paints that have superior resistance to high-pressure car washing on polyolefin substrates compared with conventional paints, and that fully exhibit oil immersion resistance.

For example, PTL 2 discloses a resin composition for paint obtained by polymerizing a chlorinated polyolefin having a chlorine content of 50 mass% or less and a vinyl monomer mixture, the resin composition for paint having excellent storage stability and capable of forming a coating film having various excellent properties, such as solvent resistance, oil resistance, and adhesive properties.

Citation List

Patent Literature

PTL 1: WO2022/054727
PTL 2: JP2002-201236A

Summary of Invention

Technical Problem

However, although modified resins in which acrylic polymer chains are grafted onto polyolefin parts have excellent storage stability, their adhesion to polyolefin substrates is reduced, and they are not considered to have sufficient resistance to high-pressure car washing or oil immersion resistance.

In consideration of the above background circumstances, the present invention provides a paint composition that has excellent resistance to high-pressure car washing on polyolefin substrates, chemical resistance, and oil immersion resistance, exhibits good adhesion, and has good storage stability, and to provide a primer paint comprising the composition.

Solution to Problem

The present inventors found that the above object can be achieved by a paint composition comprising a modified polyolefin resin having a glass transition temperature of -30°C or higher and a (meth)acrylic resin having a glass transition temperature of 0°C or higher and a hydroxyl value of 5 to 150 mgKOH/g, wherein the (meth)acrylic resin comprises a polymer of a radically polymerizable compound, and the radically polymerizable compound comprises polyfunctional (meth)acrylate. Thus, the present invention has been accomplished.

The present invention encompasses, for example, the subject matter set forth in the following item.

[1] A paint composition comprising a modified polyolefin (A) and a (meth)acrylic resin (B),

the modified polyolefin (A) having a glass transition temperature of -30°C or higher,
the (meth)acrylic resin (B) comprising a polymer of a radically polymerizable compound (b1), and the radically polymerizable compound (b1) comprising polyfunctional (meth)acrylate,
the (meth)acrylic resin (B) having a glass transition temperature of 0°C or higher, and
the (meth)acrylic resin (B) having a hydroxyl value of 5 to 150 mgKOH/g.

Advantageous Effects of Invention

According to the present invention, it is possible to provide a paint composition that has excellent resistance to high-pressure car washing on polyolefin substrates, chemical resistance, and oil immersion resistance, exhibits good adhesion, and has good storage stability, and to provide a primer paint comprising the composition.

Description of Embodiments

The following describes embodiments of the present invention in detail.

Modified Polyolefin (A)

The modified polyolefin (A) used in the present invention is a modified polyolefin resin.

The polyolefin resin may be a polymer of a single $\alpha$-olefin or a copolymer of two or more $\alpha$-olefins. Examples of $\alpha$-olefins include ethylene, propylene, 1-butene, 1-pentene, 1-hexene, 1-heptene, 1-octene, and the like. When the polyolefin resin is a copolymer, the polyolefin resin may be a random copolymer or a block copolymer.

Preferred polyolefin resins are polypropylene and a propylene-$\alpha$-olefin copolymer, from the viewpoint of achieving sufficient adhesion to non-polar resin substrates. Preferred among these are polypropylene (propylene homopolymer), an ethylene-propylene copolymer, a propylene-1-butene copolymer, and a propylene-ethylene-butene copolymer.

The ratio of the propylene component and the $\alpha$-olefin component in the propylene-$\alpha$-olefin copolymer is not limited; however, it is preferable to contain 50 mol% or more, and more preferably 70 mol% or more, of a structural unit derived from propylene in 100 mol% of the structural units. When the structural unit derived from propylene is contained within the above range, the adhesion of the paint composition to polyolefin substrates can be easily maintained.

The weight average molecular weight (Mw) of the modified polyolefin (A) is preferably within the range of 20,000 to 180,000. The Mw is more preferably within the range of 40,000 to 150,000, and even more preferably within the range of 60,000 to 120,000. If the Mw is less than 20,000, the cohesive strength is reduced, and the adherence properties may be inferior. On the other hand, if the Mw exceeds 180,000, solubility in solvents and compatibility with the (meth)acrylic resin (B) are reduced, and the storage stability of the paint may be reduced.

The modified polyolefin (A) is preferably crystalline. The modified polyolefin (A) in a crystalline form is advantageous in terms of its higher cohesive strength and excellent adherence properties, water resistance, heat resistance, and chemical resistance, as compared with its amorphous form.

Crystalline polyolefins as used herein refer to those that show a clear melting peak during heating from -100°C to 250°C at an increase rate of 10°C/minute with a differential scanning calorimeter (which is also referred to as "DSC"; Q-2000 manufactured by TA Instruments Japan). The melting point is determined with a DSC, which measures the top temperature of the melting peak while a polyolefin is heated and melted at an increase rate of 10°C/minute, then cooled into a resin form, and heated and melted again.

The melting point (Tm) of the modified polyolefin (A) is preferably 40°C or higher, more preferably 50°C or higher, and even more preferably 60°C or higher. The melting point is also preferably 120°C or lower, more preferably 100°C or lower, and even more preferably 90°C or lower. If the melting point is less than 40°C, the cohesive strength is reduced, and the resistance to high-pressure car washing may be inferior. If the melting point exceeds 120°C, solubility in solvents is reduced, and the storage stability of the paint may be inferior.

The glass transition temperature (hereinafter, Tg) of the modified polyolefin (A) is -30°C or higher. Tg is preferably - 25°C or higher, and more preferably -20°C or higher. Because Tg is -30°C or higher, even when high-pressure, high-temperature hot water is sprayed in a high-pressure car wash resistance test, the adhesion between the substrate and the coating film is good, the coating film is less affected, and the resistance to high-pressure car washing is improved. The upper limit of the glass transition temperature (Tg) of the modified polyolefin (A) in the present disclosure is not particularly limited, but is, for example, 50°C or lower from the viewpoint of the performance of the coating film formed from the paint composition.

The polyolefin resin may be a polyolefin resin using a raw material of biological origin instead of a petroleum-derived polyolefin resin. Bio-derived polyolefin resins refer to polyolefin resins produced from biological resources (biomass). Biological resources are formed from organic resources derived from renewable living organisms, excluding fossil resources, and are produced using agricultural crops, plants, microorganisms, agricultural waste, discarded food, etc. as raw materials. Due to the use of renewable resources, carbon dioxide emissions can be reduced and the environment can be protected, as compared with the use of petroleum-derived raw materials.

The polyolefin using a raw material of biological origin preferably contains at least a propylene structural unit. The biomass degree of the polyolefin resin is 25% or more, preferably 27% or more, and more preferably 30% or more. The upper limit may be 100% or less, and is not particularly limited. The biomass degree in total carbon can be calculated from the content of carbon isotope with a mass number of 14 measured in accordance with ASTM D6866.

The modified polyolefin (A) preferably contains at least one of an acid-modified polyolefin (a1) and an acid-modified chlorinated polyolefin (a2), although it is not particularly limited thereto.

The mass ratio of the modified polyolefin (A) in the total solids content of the paint composition is preferably 5 mass% or more and 80 mass% or less. In this case, the coating film formed from the paint composition can maintain higher adhesion. The mass ratio of the modified polyolefin (A) in the total solids content of the paint composition is more preferably 10 mass% or more and 70 mass% or less, and even more preferably 20 mass% or more and 60 mass% or less. The total solids content as mentioned herein refers to the total amount of all components excluding solvents and other components that volatilize during the process of forming a coating film from the paint composition.

Acid-Modified Polyolefin (a1)

In the present invention, the acid-modified polyolefin (a1) is not limited, but is preferably one obtained by modifying at least one of an $\alpha$-olefin polymer and copolymer with acid, and more preferably one obtained by grafting with at least one of $\alpha,\beta$-unsaturated carboxylic acid and an acid anhydride thereof.

Examples of at least one of $\alpha,\beta$-unsaturated carboxylic acid and an acid anhydride thereof include maleic acid, itaconic acid, citraconic acid, acid anhydrides thereof, and the like. Preferred among these are acid anhydrides, and more preferred is maleic anhydride. Even more preferred are specifically maleic anhydride-modified polypropylene, a maleic anhydride-modified propylene-ethylene copolymer, a maleic anhydride-modified-butene copolymer, a maleic anhydride-modified propylene-ethylene-butene copolymer, and the like. These acid-modified polyolefins can be used alone or in a combination of two or more.

The method for producing the acid-modified polyolefin (a1) is not particularly limited. Examples include radical grafting reaction (i.e., a reaction in which a radical species is generated on a polymer that serves as the main chain, and unsaturated carboxylic acid and acid anhydride are graft-polymerized using the radical species as a polymerization initiation point).

When a polyolefin resin is modified with acid to obtain an acid-modified polyolefin (a1), a radical generator may be used. The radical polymerization initiator is a compound capable of generating radicals by the action of heat or light. The radical generator is not particularly limited; however, it is preferable to use an organic peroxide. Examples of organic peroxides include peroxides, such as di-tert-butyl peroxyphthalate, tert-butyl hydroperoxide, dicumyl peroxide, benzoyl peroxide, tert-butyl peroxybenzoate, tert-butyl peroxy-2-ethylhexanoate, tert-butyl peroxypivalate, methyl ethyl ketone peroxide, di-tert-butyl peroxide, and lauroyl peroxide; and azonitriles, such as 2,2'-azobisisobutyronitrile, 2,2'-azobis(4-methoxy-2,4-dimethylvaleronitrile), 2,2'-azobis(2-cyclopropylpropionitrile), and 2,2'-azobis(2,4-dimethyldimethylvaleronitrile).

The amount of acid modification of the acid-modified polyolefin (a1) is preferably 0.1 mass% or more, more preferably 0.3 mass% or more, and even more preferably 0.5 mass% or more, per 100 mass% of the acid-modified polyolefin. The amount of acid modification is also preferably 30 mass% or less, more preferably 10 mass% or less, and even more preferably 5 mass% or less. Without the above range, the adherence properties to polyolefin substrates may be reduced.

The acid value of the acid-modified polyolefin (a1) is preferably 4 to 40 mgKOH/g, more preferably 5 to 35 mgKOH/g, and even more preferably 6 to 30 mgKOH/g. If the acid value is less than 4 mgKOH/g, the crosslinking reaction with the crosslinking agent contained in the topcoat paint layer may be insufficient. On the other hand, if the acid value exceeds 40 mgKOH/g, the storage stability of the paint may be reduced.

Acid-Modified Chlorinated Polyolefin (a2)

The acid-modified chlorinated polyolefin (a2) used in the present invention is not limited, but is preferably obtained, for example, by chlorinating the acid-modified polyolefin (a1).

The method for producing the acid-modified chlorinated polyolefin (a2) is not particularly limited. For example, it can be obtained by dissolving the acid-modified polyolefin (a1) in halogenated hydrocarbon, such as chloroform, and introducing chlorine thereinto.

The lower limit of the chlorine content of the acid-modified chlorinated polyolefin (a2) is preferably 5 mass% or more, more preferably 10 mass% or more, and even more preferably 15 mass% or more, per 100 mass% of the acid-modified chlorinated polyolefin, from the viewpoint of solution stability and adherence properties. Within the above range, particularly acid-modified chlorinated homopolypropylene exhibits good adhesive strength to polyolefin substrates. The upper limit is preferably 40 mass% or less, more preferably 35 mass% or less, and even more preferably 30 mass% or less. If the chlorine content exceeds the above upper limit, the crystallinity of the acid-modified chlorinated polyolefin is reduced, and adhesive strength may be reduced.

(Meth)acrylic Resin (B)

In the present invention, "(meth)acrylate" refers to "acrylate or methacrylate," and "(meth)acrylic acid" refers to "acrylic acid or methacrylic acid."

The (meth)acrylic resin (B) contains a polymer of a radically polymerizable compound (b1). The radically polymerizable compound (b1) may be a compound having suitable radical reactivity. For example, the radically polymerizable compound (b1) is a compound having at least one ethylenically unsaturated bond in the molecule.

The radically polymerizable compound (b1) contains polyfunctional (meth)acrylate. This increases the crosslinking density of the acrylic resin (B), and oil immersion resistance can be well exhibited.

The number of functional groups in the polyfunctional (meth)acrylate is preferably 2 to 6, and more preferably 2 or 3. If the number of functional groups exceeds 6, thickening tends to occur, and storage stability may be reduced.

As the polyfunctional (meth)acrylate, examples of bifunctional (meth)acrylates include alkanediol di(meth)acrylates, such as 1,4-butanediol di(meth)acrylate, neopentyl glycol di(meth)acrylate, 1,6-hexanediol di(meth)acrylate, 1,9-nonanediol di(meth)acrylate, and tricyclodecane dimethylol di(meth)acrylate; bisphenol-modified di(meth)acrylates, such as bisphenol A ethylene oxide-modified di(meth)acrylate and bisphenol F ethylene oxide-modified di(meth)acrylate; polyethylene glycol di(meth)acrylate, polypropylene glycol di(meth)acrylate, urethane di(meth)acrylate, epoxy di(meth)acrylate, and the like. Examples of trifunctional or higher polyfunctional methacrylates include, but are not particularly limited to, ethylene oxide-modified (meth)acrylates, such as dipentaerythritol hexa(meth)acrylate, pentaerythritol tetra(meth)acrylate, ditrimethylolpropane tetra(meth)acrylate, pentaerythritol tri(meth)acrylate, trimethylolpropane tri(meth)acrylate, ethylene oxide-modified dipentaerythritol hexa(meth)acrylate, and ethylene oxide-modified pentaerythritol tetra(meth)acrylate; isocyanuric acid-modified tri(meth)acrylates, such as isocyanuric acid ethylene oxide-modified tri(meth)acrylate and ε-caprolactone-modified tris(acryloxyethyl)isocyanurate; and urethane methacrylates, such as pentaerythritol tri(meth)acrylate hexamethylene diisocyanate urethane prepolymer, pentaerythritol tri(meth)acrylate toluene diisocyanate urethane prepolymer, and dipentaerythritol penta(meth)acrylate hexamethylene diisocyanate urethane prepolymer. These may be used alone or in a combination of two or more. Preferred among these are bifunctional or trifunctional (meth)acrylates, and particularly preferred are 1,6-hexanediol dimethacrylate and trimethylolpropane trimethacrylate.

The polyfunctional (meth)acrylate is preferably contained in an amount of 0.1 to 5 mass% in the radically polymerizable compound (b1) constituting the (meth)acrylic resin (B). The content thereof is more preferably 0.2 to 4 mass%, and even more preferably 0.5 to 3 mass%. If the content of the polyfunctional (meth)acrylate is less than 0.1 mass%, oil immersion resistance may not be sufficiently exhibited. On the other hand, if the content of the polyfunctional (meth)acrylate exceeds 5 mass%, aggregation may occur when it is made into a (meth)acrylic resin or paint composition.

Further, the radically polymerizable compound (b1) preferably contains a radically polymerizable compound having a hydroxyl group. In this case, the adhesion to polar substrates, such as polycarbonate substrates and ABS substrates, can be improved. Further, by having crosslinking points, crosslinking can occur with the paint used for topcoat or the substrate, and the adhesion to the topcoat paint and to the substrate can be improved.

Examples of the radically polymerizable compound having a hydroxyl group include 2-hydroxyethyl (meth)acrylate, 2-hydroxypropyl (meth)acrylate, 3-hydroxypropyl (meth)acrylate, 4-hydroxybutyl (meth)acrylate, 1,4-cyclohexanedimethanol monoacrylate, polyethylene glycol mono(meth)acrylate, polypropylene glycol mono(meth)acrylate, polybutylene glycol mono(meth)acrylate, polyethylene glycol-polypropylene glycol mono(meth)acrylate, 2-hydroxy-3-phenoxypropyl (meth)acrylate, and the like. These can be used alone or in a combination of two or more.

The radically polymerizable compound having a hydroxyl group is preferably contained in an amount of 0.5 to 40 mass% in the radically polymerizable compound (b1) constituting the (meth)acrylic resin (B). The content thereof is more preferably 3 to 30 mass%, and even more preferably 7 to 20 mass%. When the content is 0.5 mass% or more, the resistance to high-pressure car washing and oil immersion resistance are easily improved, and good adhesion to polar substrates, such as polycarbonate substrates and ABS substrates, can be easily maintained. When the content is 40 mass% or less, water resistance tends to be better, and the compatibility between the modified polyolefin (A) and the (meth)acrylic resin (B) can be easily maintained in a good state, and the paint can easily maintain good storage stability.

The radically polymerizable compound (b1) may contain at least one of (meth)acrylate having an alkoxymethyl group and (meth)acrylate having an alkoxyethyl group. In this case, while maintaining good compatibility between the modified polyolefin (A) and the (meth)acrylic resin (B), the adhesion to polar substrates, such as polycarbonate substrates and ABS substrates, can be improved. In addition, the adhesion to the paint used for topcoat can also be improved.

Specific examples of the (meth)acrylate having an alkoxymethyl group include methoxymethyl (meth)acrylate, ethoxymethyl (meth)acrylate, propoxymethyl (meth)acrylate, butoxymethyl (meth)acrylate, and the like. Specific examples of the (meth)acrylate having an alkoxyethyl group include 2-methoxyethyl (meth)acrylate, 1-methoxyethyl (meth) acrylate, 2-ethoxyethyl (meth)acrylate, 1-ethoxyethyl (meth)acrylate, 2-propoxyethyl (meth)acrylate, 1-propoxyethyl (meth)acrylate, 2-butoxyethyl (meth)acrylate, 1-butoxyethyl (meth)acrylate, 2-(2-methoxyethoxy)ethyl (meth)acrylate, 2-(2-ethoxyethoxy)ethyl (meth) acrylate, 2-(2-butoxyethoxy)ethyl (meth)acrylate, [2-(2-methoxyethoxy)ethoxy]ethyl (meth)acrylate, and the like. In order to obtain good adhesion, it is preferable to use, among these, (meth)acrylates whose alkoxymethyl group or alkoxyethyl group has 5 or less carbon atoms, such as methoxymethyl (meth)acrylate, ethoxymethyl (meth)acrylate, propoxymethyl (meth)acrylate, 2-methoxyethyl (meth)acrylate, 1-methoxyethyl (meth) acrylate, 2-ethoxyethyl (meth)acrylate, 1-ethoxyethyl (meth)acrylate, 2-propoxyethyl (meth)acrylate, and 1-propoxyethyl (meth)acrylate.

The (meth)acrylate having an alkoxymethyl group and the (meth)acrylate having an alkoxyethyl group are preferably contained in a total amount of 1 to 55 mass% in the radically polymerizable compound (b1) constituting the (meth)acrylic resin (B). The total content thereof is more preferably 3 to 50 mass%, and even more preferably 5 to 40 mass%. When the total content is 1 mass% or more, the adhesion to polar substrates, such as polycarbonate substrates and ABS substrates, can be easily maintained in a good state. When the total content is 55 mass% or less, the compatibility between the modified polyolefin (A) and the (meth)acrylic resin (B) can be easily maintained in a good state, and the paint can easily maintain good storage stability.

By containing, as the radically polymerizable compound (b1), at least one of (meth)acrylate having an alkoxymethyl group and (meth)acrylate having an alkoxyethyl group, and a radically polymerizable compound having a hydroxyl group, the balance between the compatibility with the modified polyolefin and the crosslinking reaction can be achieved, making it easier to obtain a paint composition that has excellent adhesion to both non-polar and polar substrates, excellent water resistance, and excellent storage stability.

Examples of the radically polymerizable compound (b1) other than the above include the following:

alkyl (meth)acrylate compounds, such as methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, n-hexyl (meth)acrylate, n-octyl (meth)acrylate, 2-ethylhexyl (meth)acrylate, dodecyl (meth)acrylate, stearyl (meth)acrylate, and behenyl (meth)acrylate; (meth)acrylate compounds having an alicyclic structure, such as cyclohexyl (meth)acrylate and isobornyl (meth)acrylate; carboxyl group-containing ethylenically unsaturated monomers, such as (meth)acrylic acid, itaconic acid, maleic acid, fumaric acid, crotonic acid, and cinnamic acid; acid anhydride group-containing ethylenically unsaturated monomers, such as maleic anhydride, itaconic anhydride, and citraconic anhydride; aromatic ring-containing (meth)acrylate compounds, such as benzyl (meth)acrylate, phenoxyethyl acrylate, and phenoxyethyl methacrylate; amino group-containing ethylenically unsaturated monomers, such as dimethylaminoethyl (meth)acrylate, diethylaminoethyl (meth)acrylate, t-butylaminoethyl (meth)acrylate, methylethylaminoethyl (meth)acrylate, dimethylaminostyrene, diethylaminostyrene, pentamethylpiperidinyl (meth)acrylate, and tetramethylpiperidinyl (meth)acrylate; epoxy group-containing ethylenically unsaturated monomers, such as glycidyl (meth)acrylate and 3,4-epoxycyclohexyl (meth)acrylate; alkoxysilyl group-containing ethylenically unsaturated monomers, such as γ-methacryloxypropyltrimethoxysilane, γ-methacryloxypropyltriethoxysilane, γ-methacryloxypropyltributoxysilane, γ-methacryloxypropylmethyldimethoxysilane, γ-methacryloxypropylmethyldiethoxysilane, γ-acryloxypropyltrimethoxysilane, γ-acryloxypropyltriethoxysilane, γ-acryloxypropylmethyldimethoxysilane, γ-methacryloxymethyltrimethoxysilane, γ-acryloxymethyltrimethoxysilane, vinyltrimethoxysilane, vinyltriethoxysilane, vinyltributoxysilane, and vinylmethyldimethoxysilane; polyethyleneoxy group-containing ethylenically unsaturated monomers, such as polyethylene glycol mono(meth)acrylate, polyethylene glycol/polypropylene glycol mono(meth)acrylate, and methoxypolyethylene glycol mono(meth)acrylate; amide group-containing ethylenically unsaturated monomers, such as (meth)acrylamide, N-methoxymethyl-(meth)acrylamide, N-ethoxymethyl-(meth)acrylamide, N-propoxymethyl-(meth)acrylamide, N-butoxymethyl-(meth)acrylamide, N-pentoxymethyl-(meth)acrylamide, N,N-di(methoxymethyl)acrylamide, N-ethoxymethyl-N-methoxymethylmethacrylamide, N,N-di(ethoxymethyl)acrylamide, N-ethoxymethyl-N-propoxymethylmethacrylamide, N,N-di(propoxymethyl)acrylamide, N-butoxymethyl-N-(propoxymethyl)methacrylamide, N,N-di(butoxymethyl)acrylamide, N-butoxymethyl-N-(methoxymethyl)methacrylamide, N,N-di(pentoxymethyl)acrylamide, N-methoxymethyl-N-(pentoxymethyl)methacrylamide, N,N-dimethylaminopropylacrylamide, N,N-diethylaminopropylacrylamide, N,N-dimethylacrylamide, N,N-diethylacrylamide, and diacetone (meth) acrylamide; aromatic vinyl compounds, such as styrene, α-methylstyrene, o-methylstyrene, p-methylstyrene, m-methylstyrene, vinylnaphthalene, and indene; (meth)acrylonitrile, acryloylmorpholine, and the like.

These may be used alone or in a combination of two or more. The radically polymerizable compound (b1) is not limited to the compounds listed above.

The radically polymerizable compound (b1) may contain a chain transfer agent. The chain transfer agent is a radical polymerization regulator that reacts with the end of a growing polymer chain in radical polymerization to terminate the polymer growth and at the same time generate new polymerization initiation radicals. Examples of chain transfer agents include, but are not particularly limited to, mercaptans, such as n-dodecyl mercaptan (lauryl mercaptan), 2-ethylhexyl thioglycolate, 2,4-diphenyl-4-methyl-1-pentene, 2-mercaptoethanol, 2,3-dimercapto-1-propanol, and glycidyl mercaptan; and allyl compounds, such as allyl acetate, α-methylstyrene dimer, and allyl carbinol.

When a polymer is obtained from the radically polymerizable compound (b1), a radical generator may be used. The radical generator is a compound capable of generating radicals by the action of heat or light. Examples of radical generators include organic peroxide radical generators, such as di-tert-butyl peroxyphthalate, tert-butyl hydroperoxide, dicumyl peroxide, benzoyl peroxide, tert-butyl peroxybenzoate, tert-butyl peroxy-2-ethylhexanoate, tert-butyl peroxypivalate, methyl ethyl ketone peroxide, di-tert-butyl peroxide, and lauroyl peroxide; and azonitrile radical generators, such as 2,2'-azobisisobutyronitrile, 2,2'-azobis(4-methoxy-2,4-dimethylvaleronitrile), 2,2'-azobis(2-cyclopropylpropionitrile), and 2,2'-azobis(2,4-dimethyldimethylvaleronitrile).

The radically polymerizable compound (b1) may contain a biomass-derived (meth)acrylic monomer component. The biomass-derived (meth)acrylic monomer component is composed of biomass-derived (meth)acrylic acid or an ester of biomass-derived alkanol and biomass-derived or non-biomass-derived (meth)acrylic acid. Examples of biomass-derived alkanols include biomass ethanol, and alkanols derived from plant raw materials, such as palm oil, palm kernel oil, and coconut oil. When the biomass-derived alkanol has 3 or more carbon atoms, the alkanol may be linear or branched.

The glass transition temperature (Tg) of the (meth)acrylic resin (B) is 0°C or higher. Tg of the (meth)acrylic resin (B) is preferably 2°C or higher, and more preferably 10°C or higher. This can impart water resistance and resistance to high-pressure car washing to the coating film formed from the paint composition. The upper limit of Tg of the (meth)acrylic resin (B) in the present disclosure is not particularly limited, but is, for example, 150°C or lower, from the viewpoint of workability in the process of forming the coating film from the paint composition.

Tg of the (meth)acrylic resin (B) is a value theoretically calculated from the composition ratio of the radically polymerizable monomer (b1), and is calculated using the following calculation formula (FOX formula).

$$1/Tg = C1/Tg1 + C2/Tg2 + \ldots + Cn/Tgn : \text{(FOX formula)}$$

[In the above calculation formula (FOX formula), Cn is the mass fraction of each of n types of monomers, Tgn is the glass transition temperature of each of the homopolymers of n types of monomers, and n is the type of monomer used as the radically polymerizable monomer (b1) and indicates a positive integer. That is, this is a calculation formula when the (meth) acrylic resin (B) is obtained by polymerization of n types of monomers. The unit of the glass transition temperature in the above calculation formula (FOX formula) is absolute temperature "K," and the value converted from the calculated value to Celsius temperature "°C" is regarded as the glass transition temperature of the (meth)acrylic resin (B).]

As Tg of the homopolymer of the monomer, a value given in literature can be used. Examples of such literature include the (meth)acrylic acid ester catalogue published by Kyoeisha Chemical Co., Ltd.; the acrylic ester catalogue published by Mitsubishi Chemical Corporation; and Kyozo KITAOKA, "New Polymer Bunko 7, Introduction to Synthetic Resins for Paints," published by Polymer Publishing Association, 1997, pages 168-169.

When the radical polymerizable monomer (b1) contains a monomer whose glass transition temperature is unknown, such as a special monomer or a polyfunctional monomer, in a small amount, the glass transition temperature of the (meth)acrylic resin (B) can be determined using only the monomer whose glass transition temperature is known.

The weight average molecular weight (Mw) of the (meth)acrylic resin (B) is preferably 1,000 or more, more preferably 5,000 or more, and even more preferably 10,000 or more. The weight average molecular weight is also preferably 100,000 or less, and more preferably 50,000 or less. If the weight average molecular weight is less than 1,000, the cohesive strength is reduced, and resistance to high-pressure car washing may be inferior. On the other hand, if the weight average molecular weight exceeds 100,000, the storage stability of the paint may be reduced.

The hydroxyl value of the (meth)acrylic resin (B) is 5 to 150 mgKOH/g. The hydroxyl value of the (meth)acrylic resin (B) is preferably 10 to 100 mgKOH/g, and more preferably 20 to 80 mgKOH/g. If the hydroxyl value is less than 5 mgKOH/g, the crosslinking reaction is insufficient, the adhesion is reduced, and the resistance to high-pressure car washing and oil immersion resistance are also reduced. On the other hand, if the hydroxyl value exceeds 150 mgKOH/g, the water resistance of the paint composition decreases, and the storage stability of the paint is reduced due to hydrogen bonding and the crosslinking reaction.

The acid value of the (meth)acrylic resin (B) is preferably 0.1 to 30 mgKOH/g. The acid value of the (meth)acrylic resin (B) is more preferably 1 to 25 mgKOH/g, even more preferably 2 to 20 mgKOH/g, and particularly preferably 3 to 15 mgKOH/g. In this case, the adhesion to polar substrates, such as polycarbonate substrates and ABS substrates, can be improved. Further, by having crosslinking points, crosslinking can occur with the paint used for topcoat or the substrate, and the adhesion to the topcoat paint and to the substrate can be improved. In addition, excellent resistance to high-pressure car washing and oil immersion resistance are ensured, and particularly excellent chemical resistance, such as volatile oil resistance and gasoline resistance, is ensured. If the acid value exceeds 30 mgKOH/g, water resistance and the storage stability of the paint composition may be reduced. The "acid value" refers to the number of mg of potassium hydroxide required to neutralize 1 g of the solids content of the (meth)acrylic resin (B).

The hydroxyl value of the (meth)acrylic resin (B) is the value expressed in terms of solids content, and can be evaluated in accordance with the pyridine-acetyl chloride method of JIS K 0070-1992. The acid value of the (meth)acrylic resin (B) is the value expressed in terms of solids content, and can be evaluated in accordance with the potentiometric titration method of JIS K 0070-1992.

The content of the (meth)acrylic resin (B) is preferably 25 parts by mass or more per 100 parts by mass of the modified polyolefin (A). The content is more preferably 50 parts by mass or more, and even more preferably 100 parts by mass or more. In this case, the resistance to high-pressure car washing is good, the compatibility between the modified polyolefin (A) and the (meth)acrylic resin (B) is good, and good paint storage stability can be obtained. If the content is less than 25 parts by mass, the adhesion to polar substrates, such as polycarbonate substrates and ABS substrates, may be reduced. The content of the (meth)acrylic resin (B) is also preferably 900 parts by mass or less, more preferably 450 parts by mass or less, and even more preferably 300 parts by mass or less. If the content exceeds 900 parts by mass, the adhesion to polyolefin substrates is reduced, and the resistance to high-pressure car washing and oil immersion resistance may be inferior.

The mass ratio of the (meth)acrylic resin (B) in the total solids content of the paint composition is preferably 5 mass% or more and 80 mass% or less. In this case, a coating film formed from the paint composition can maintain higher adhesion. The mass ratio of the (meth)acrylic resin (B) in the total solids content of the paint composition is more preferably 10 mass% or more and 70 mass% or less, and even more preferably 20 mass% or more and 60 mass% or less. The total solids content as mentioned herein refers to the total amount of all components excluding solvents and other components that volatilize during the process of forming a coating film from the paint composition.

Solvent (C)

In the present invention, the paint composition may contain a solvent (C). The solvent (C) is used for the purpose of, for example, adjusting the viscosity of the paint composition, adjusting the coating properties, and adjusting the film-forming properties. The solvent (C) is not limited as long as it can dissolve the acid-modified polyolefin (A) and the (meth)acrylic resin (B). Examples of a hydrocarbon-based solvent (C1) include aromatic hydrocarbon-based solvents, such as toluene, xylene, and Solvesso (registered trademark) 100; aliphatic hydrocarbon-based solvents, such as hexane and heptane; and alicyclic hydrocarbon-based solvents, such as cyclohexane, cyclohexene, methylcyclohexane, and ethylcyclohexane. One or more of these can be preferably used. Preferred among these is xylene or cyclohexane. In particular, a combination of xylene, Solvesso (registered trademark) 100, methylcyclohexane, and cyclohexane is preferred.

The hydrocarbon-based solvent (C1) is preferably contained in an amount of 200 parts by mass or more, more preferably 300 parts by mass or more, and even more preferably 400 parts by mass or more, per 100 parts by mass of the modified polyolefin (A). The amount of the hydrocarbon-based solvent (C1) is also preferably 3,000 parts by mass or less, more preferably 2,000 parts by mass or less, and even more preferably 1,000 parts by mass or less. Within the above range, the paint composition can easily exhibit excellent storage stability.

It is also preferable that the solvent (C) contains a hydrocarbon-based solvent (C1) and further contains at least one of an ester-based solvent (C2) and a ketone-based solvent (C3). In this case, a thickening inhibitory effect can be obtained, and the paint composition can easily exhibit excellent storage stability.

Examples of the ester-based solvent (C2) include methyl acetate, ethyl acetate, propyl acetate, isopropyl acetate, butyl acetate, isobutyl acetate, amyl acetate, and the like. Preferred among these are ethyl acetate and butyl acetate. Examples of the ketone-based solvent (C3) include acetone, methyl ethyl ketone, methyl isobutyl ketone, and methyl amyl ketone, with methyl ethyl ketone being preferred. A combination of two or more of the ester-based solvent (C2) and the ketone-based solvent (C3) is also a preferred embodiment.

The content (total amount) of the ester-based solvent (C2) and the ketone-based solvent (C3) is preferably 20 parts by mass or more, and more preferably 50 parts by mass or more, per 100 parts by mass of the total amount of the modified polyolefin (A) and the (meth)acrylic resin (B). The content is also preferably 500 parts by mass or less, more preferably 400 parts by mass or less, and even more preferably 200 parts by mass or less.

The content (mass ratio) of the ester-based solvent (C2) and ketone-based solvent (C3) to the hydrocarbon-based solvent (C1), (C2+C3):(C1), is preferably 5:95 to 95:5, more preferably 10:90 to 92:8, and even more preferably 15:85 to 90:10.

The paint composition of the present invention may contain an alcohol-based solvent (C4) as the solvent (C). The alcohol-based solvent (C4) has high polarity and is therefore more effective in adjusting viscosity and inhibiting thickening, and the paint composition can exhibit excellent storage stability. In addition, it can increase the solids content, contributing to the reduction of solvent consumption. Examples of the alcohol-based solvent (C4) include methanol, ethanol, normal propyl alcohol, isopropyl alcohol, normal butanol, isobutanol, 2-butanol, and the like. The content of the alcohol-based solvent (C4) is preferably 0.1 mass% or more, and more preferably 0.5 mass% or more, and is preferably 5 mass% or less, and more preferably 3 mass% or less, in 100 mass% of the solvent (C).

The content of the alcohol-based solvent (C4) is preferably 1 part by mass or more, and more preferably 5 parts by mass or more, per 100 parts by mass of the total amount of the modified polyolefin (A) and the (meth)acrylic resin (B). The content of the alcohol-based solvent (C4) is also preferably 50 parts by mass or less, and more preferably 30 parts by mass or less.

Pigment

The paint composition of the present invention may contain a pigment. Examples of usable pigments include coloring pigments, extender pigments, conductive pigments, and the like.

Examples of coloring pigments include titanium oxide, carbon black, yellow lead, yellow ochre, Hansa yellow, pigment yellow, chrome orange, permanent orange, permanent red, fast violet, methyl violet lake, iron blue, cobalt blue, phthalocyanine blue, pigment green, naphthol green, aluminum paste, and the like. These can be used alone or in a combination of two or more.

Examples of extender pigments include barium sulfate, talc, silica, calcium carbonate, and the like. These can be used alone or in a combination of two or more.

Conductive pigments are not particularly limited as long as they can impart conductivity to the coating film, and any shape, such as particles, flakes, or fibers (including whiskers), can be used. Examples of conductive pigments include conductive carbon, carbon nanotubes, carbon nanofibers, silver, nickel, copper, graphite, aluminum, antimony-doped tin oxide, phosphorus-doped tin oxide, acicular titanium oxide surface-coated with tin oxide/antimony, antimony oxide, zinc antimonate, indium tin oxide, and the like. These can be used alone or in a combination of two or more.

When the paint composition of the present invention contains a pigment, the content thereof is preferably 50 to 700 parts by mass, and more preferably 75 to 350 parts by mass, per 100 parts by mass of the modified polyolefin (A).

(Solvent-Based) Paint Composition

The paint composition of the present invention is composed of a modified polyolefin (A) and a (meth)acrylic resin (B), and can be provided after dilution as necessary.

The paint composition proposed in the present invention may contain an alkyd resin, a urethane resin, a tackifier, and the like within the range that does not impair the effects of the present invention. Any of these may be produced from raw materials derived from biomass.

The paint composition of the present invention is preferably a substantially solvent-based paint composition. It is also preferable that the solvent (C) contains a hydrocarbon-based solvent (C1) and an alcohol-based solvent (C4), and further contains at least one of an ester-based solvent (C2) and a ketone-based solvent (C3). When the total amount of solvents in the paint composition is taken as 100 mass%, the total amount of the hydrocarbon-based solvent (C1), ester-based solvent (C2), ketone-based solvent (C3), and alcohol-based solvent (C4) is preferably 90 mass% or more, more preferably 95 mass% or more, and even more preferably 99 mass% or more, or may be 100 mass%. The substantially solvent-based paint composition can easily exhibit excellent water resistance and resistance to high-pressure car washing.

The viscosity of the paint composition during coating is not particularly limited, but is preferably within the range of 10 to 300 mPa·sec, and more preferably within the range of 15 to 200 mPa·sec. In this case, coating workability is good, and it is suitable in terms of finished appearance.

The paint composition of the present invention may contain a curing agent within the range that does not impair the effects of the present invention. The curing agent is preferably a blocked isocyanate or an epoxy-based curing agent. Blocked isocyanates can be made into one-component paint compositions by masking the isocyanate groups with a blocking agent, and can be cured by heating when forming a coating film.

Primer Paint

The paint composition of the present invention can be used as a primer paint for coating the surface of a polyolefin substrate. The polyolefin substrate may be a known polyolefin substrate, such as polypropylene, polyethylene, or an ethylene-propylene copolymer, but is preferably a polypropylene substrate.

The paint composition of the present invention can be used as a primer paint for coating the surface of a polar substrate. Examples of the polar substrate include known plastic polar substrates, such as ABS and polycarbonate, with ABS substrates being preferred.

Examples of coated articles obtained from the paint composition of the present invention include structures, metal products, plastic products, rubber products, and the like. More specifically, examples include automotive exterior panels, automotive parts (e.g., bodies, bumpers, spoilers, mirrors, wheels, fenders, radiator grilles, interior materials, and other parts made of various materials), and the like.

The paint composition of the present invention may be a colored or colorless clear paint, or can be a colored paint. In addition, a topcoat layer can be further formed on a coating film formed from the paint composition of the present invention. Examples of the topcoat layer include an acrylic resin. The method for further forming a topcoat layer on the coating film formed from the paint composition of the present invention is, for example, a method that involves coating a primer paint on all or part of a substrate, leaving the coating film at room temperature as appropriate, or heating to dry or cure the coating film, and then coating a topcoat layer.

The method for applying the paint composition of the present invention is not particularly limited, and known methods, such as brushing, spraying, and dipping, can be used.

Examples

The present invention is described in detail below with reference to Examples; however, the present invention is not limited to these Examples. In the Examples and Comparative Examples, the term "parts" alone refers to parts by mass. The measurement and evaluation methods used in the present invention are as follows.

Measurement Method

Measurement of Acid Value of Modified Polyolefin (A)

The acid value (mgKOH/g) of the modified polyolefin (A) in the present invention was calculated using FT-IR (FT-IR8200PC, manufactured by Shimadzu Corporation) according to the following formula, using a coefficient (f) obtained from a calibration curve prepared using a chloroform solution of maleic anhydride (manufactured by Tokyo Chemical Industry Co., Ltd.) and the absorbance (I) of the stretching peak (1780 cm-1) of the carbonyl bond (C=O) of succinic anhydride in the acid-modified polyolefin solution.

Acid value (mgKOH/g) = [absorbance (I) $\times$ (f) $\times$ 2 $\times$ molecular weight of potassium hydroxide $\times$ 1000 (mg)/molecular weight of succinic anhydride]

Molecular weight of succinic anhydride: 100.07
Molecular weight of potassium hydroxide: 56.11

Measurement of Weight Average Molecular Weights (Mw) of Modified Polyolefin (A) and (Meth)acrylic Resin (B)

The weight average molecular weights of the modified polyolefin (A) and (meth)acrylic resin (B) in the present invention were measured by using an Alliance e2695 gel permeation chromatograph manufactured by Nihon Waters K.K. (referred to below as "GPC"; standard substance: polystyrene resin, mobile phase: tetrahydrofuran, column: Shodex KF-806 + KF-803, column temperature: 40°C, flow rate: 1.0 ml/minute, detector: photodiode array detector (wavelength 254 nm = ultraviolet light)).

Measurement of Tm and Tg of Modified Polyolefin (A)

The Tm and Tg measured by DSC in the present invention were measured in accordance with JIS K7121-2012. Using a DSC measuring device (manufactured by Seiko Instruments Inc.), about 5 mg of a sample was heated to 150°C for 10 minutes, held in a molten state, cooled at a rate of 10°C/min, and held stable at - 50°C. Then, the temperature was

10

further increased to 150°C at a rate of 10°C/min, and the Tm and Tg values were determined from the melting peak top temperature. Tg refers to the midpoint glass transition temperature.

Measurement of Chlorine Content of Modified Polyolefin (A)

The chlorine content of the acid-modified chlorinated polyolefin (a2) was measured by titration in accordance with JIS K-7229-1995.

Production Example of Acid-Modified Polyolefin (A-1)

100 parts by mass of a propylene-butene copolymer (propylene component: 76 mol% and 1-butene component: 24 mol%) polymerized using a metallocene catalyst, 150 parts by mass of toluene, 4 parts by mass of maleic anhydride, and 10 parts by mass of di-tert-butyl peroxide were added to a 1 L autoclave and reacted at 140°C for 3 hours. Then, the resultant was poured into a container containing a large amount of methyl ethyl ketone to precipitate the resin. Then, unreacted materials were removed by centrifugation to obtain an acid-modified propylene-1-butene copolymer graft-polymerized with maleic anhydride. Thereafter, drying was performed under reduced pressure at 50°C for 5 hours to thus obtain an acid-modified propylene-1-butene copolymer (acid value: 6 mgKOH/g, weight average molecular weight: 30,000, Tm: 70°C, Tg: -20°C). The acid-modified polyolefin produced in this Production Example was regarded as A-1.

An acid-modified propylene-1-butene copolymer (acid value: 6 mgKOH/g, weight average molecular weight: 160,000, Tm: 70°C, Tg: -20°C) was obtained by the same procedure as in Production Example 1, except that the amount of di-tert-butyl peroxide was changed to 6 parts by mass. The acid-modified polyolefin synthesized in this Production Example was regarded as A-2.

An acid-modified propylene-1-butene copolymer (acid value: 36 mgKOH/g, weight average molecular weight: 30,000, Tm: 70°C, Tg: -20°C) was obtained by the same procedure as in Production Example 1, except that the amount of maleic anhydride was changed to 38 parts by mass. The acid-modified polyolefin synthesized in this Production Example was regarded as A-3.

An acid-modified propylene-1-butene copolymer (acid value: 36 mgKOH/g, weight average molecular weight: 160,000, Tm: 70°C, Tg: -20°C) was obtained by the same procedure as in Production Example 1, except that the amount of maleic anhydride was changed to 38 parts by mass, and the amount of di-tert-butyl peroxide was changed to 5 parts by mass. The acid-modified polyolefin synthesized in this Production Example was regarded as A-4.

Production Example of Acid-Modified Chlorinated Polyolefin (A-5)

100 parts by mass of a propylene-ethylene copolymer (propylene component: 98 mol% and ethylene component: 2 mol%), 150 parts by mass of toluene, 10 parts by mass of maleic anhydride, and 4 parts by mass of di-tert-butyl peroxide were added to a 1 L autoclave equipped with a stirrer, heated to 140°C, and then further stirred for 3 hours. Thereafter, the resulting reaction liquid was cooled and then poured into a container containing a large amount of methyl ethyl ketone to precipitate the resin. Then, unreacted materials were removed by centrifugation to obtain an acid-modified propylene-ethylene copolymer graft-polymerized with maleic anhydride. Thereafter, drying was performed under reduced pressure at 70°C for 5 hours to thus obtain a maleic anhydride-modified propylene-ethylene copolymer. Subsequently, 100 parts by mass of the maleic anhydride-modified propylene-ethylene copolymer and 1700 parts by mass of chloroform were placed in a 2 L glass-lined reaction vessel, and the vessel was sealed. The liquid in the reaction vessel was heated while being stirred, and the mixture was dissolved at an internal temperature of 120°C for 1 hour. After the temperature inside the reaction vessel was cooled to 110°C, 0.5 parts by mass of t-butyl-peroxy-2-ethylhexaenoate was added, and 70 parts by mass of chlorine was introduced. The temperature inside the reaction vessel was cooled to 60°C, and 1400 parts by mass of chloroform was distilled off. Thereafter, drying was performed to obtain a maleic anhydride-modified chlorinated propylene-ethylene copolymer (A-5, acid value: 15 mgKOH/g, chlorine content: 20 mass%, weight average molecular weight: 90,000, Tm: 70°C, Tg: 5°C).

Preparation Example of Modified Polyolefin Solution

280 parts by mass of cyclohexane and 120 parts by mass of xylene per 100 parts by mass of A-1 were placed in a 1000 ml four-necked flask equipped with a water-cooled reflux condenser and a stirrer, and heated to 70°C while being stirred. After stirring for 1 hour, a solution A-1 having a solids content of 20 mass% was obtained.

A-2 to A-5 were dissolved in the same manner as for the solution A-1 to obtain solutions A-2 to A-5.

280 parts by mass of cyclohexane and 120 parts by mass of xylene per 100 parts by mass of modified polyolefin (a copolymer of ethylene, ethyl acrylate, and maleic anhydride, acid value: 15 mgKOH/g-resin, weight average molecular weight: 100,000, Tm: 60°C, Tg: -40°C) were placed in a 1000 ml four-necked flask equipped with a water-cooled reflux condenser and a stirrer, and heated to 70°C while being stirred. After stirring for 1 hour, a solution A-6 was obtained.

Production Example of (Meth)acrylic Resin (B-1)

First, 10 parts by mass of 2-ethoxyethyl methacrylate (EEMA), 45 parts by mass of 2-ethylhexyl methacrylate (EHMA), 34 parts by mass of isobornyl methacrylate (IBOMA), 10 parts by mass of 2-hydroxyethyl methacrylate (HEMA), 0.1 parts by mass of trimethylolpropane trimethacrylate (TMPMA), 1 part by mass of methacrylic acid (MAA), 3 parts by mass of $\alpha$-methylstyrene dimer, 4.5 parts by mass Perbutyl O as a polymerization initiator, and 36.5 parts by mass of butyl acetate (BA) as a solvent were mixed to prepare a mixture.

Next, 113.5 parts by mass of butyl acetate (BA) was placed in a 500 ml four-necked flask equipped with a water-cooled reflux condenser and a stirrer, and sufficiently purged with nitrogen gas, and the internal temperature was raised to 90°C. Then, the prepared mixture was added dropwise using a dropping funnel for 3 hours to carry out polymerization. After completion of the dropwise addition, the mixture was further heated and aged for 5 hours, thereby obtaining a (meth) acrylic resin B-1 with a solids content of 40 mass% (hydroxyl value: 43 mgKOH/g, acid value: 6.5 mgKOH/g, Tg: 40°C, weight average molecular weight: 12000).

(Meth)acrylic resins B-2 to B-18 were obtained in the same manner, except that the radically polymerizable compound and solvent were changed as shown in Table 1. 2-Methoxyethyl methacrylate was denoted as MEMA, 1,6-hexanediol dimethacrylate as HDOMA, and xylene as XL.

Table 1

| | B-1 | B-2 | B-3 | B-4 | B-5 | B-6 | B-7 | B-8 | B-9 | B-10 | B-11 | B-12 | B-13 | B-14 | B-15 | B-16 | B-17 | B-18 |
|---|---|---|---|---|---|---|---|---|---|---|---|---|---|---|---|---|---|---|
| Solvent | | | | | | | | | | | | | | | | | | |
| BA | 150 | 150 | 150 | 150 | 150 | | 150 | 150 | 150 | 150 | 150 | 150 | 150 | 150 | 150 | 150 | 150 | 150 |
| XL | | | | | | 150 | | | | | | | | | | | | |
| Radically polymerizable monomer (b1) | | | | | | | | | | | | | | | | | | |
| EEMA | 10 | 10 | 10 | 10 | 10 | 10 | 40 | 1 | | 10 | 10 | 10 | 10 | 40 | 10 | 10 | 10 | 10 |
| MEMA | | | | | | | | | 10 | | | | | | | | | |
| EHMA | 45 | 40 | 40 | 38 | 38 | 38 | 30 | 50 | 50 | 45 | 45 | 42 | 52 | 15 | 45 | 80 | 40 | 32 |
| IBOMA | 34 | 39 | 39 | 38 | 36 | 36 | 19 | 38 | 29 | 35 | 30 | 12 | 36 | 9 | 45 | | 39 | 10 |
| HEMA | 10 | 10 | 10 | 10 | 10 | 10 | 10 | 10 | 10 | 10 | 10 | 34.5 | 1.2 | 34.5 | | 10.0 | 10.0 | 46 |
| MAA | 1.0 | 1.0 | 1.0 | 1.0 | 1.0 | 1.0 | 1.0 | 1.0 | 1.0 | | 4.6 | 1.0 | 1.0 | 1.0 | | | 1.0 | 1.0 |
| TMPMA | 0.10 | 0.20 | | 3.00 | 5.0 | 5.0 | 0.20 | 0.20 | 0.20 | 0.20 | 0.20 | 0.20 | 0.20 | 0.20 | | 0.20 | | 0.20 |
| HDOMA | | | 0.20 | | | | | | | | | | | | | | | |
| Total | 100 | 100 | 100 | 100 | 100 | 100 | 100 | 100 | 100 | 100 | 100 | 100 | 100 | 100 | 100 | 100 | 100 | 100 |
| (Meth)acrylic resin (B) | | | | | | | | | | | | | | | | | | |
| Polymer Tg | 40 | 39 | 39 | 48 | 46 | 46 | 10 | 49 | 36 | 39 | 41 | 26 | 35 | 13 | 48 | -7 | 48 | 31 |
| Hydroxyl value (mgKOH/g) | 43 | 43 | 43 | 43 | 43 | 43 | 43 | 43 | 43 | 43 | 43 | 149 | 5.0 | 149 | 0 | 43 | 43 | 200 |
| Acid value (mgKOH/g) | 6.5 | 6.5 | 6.5 | 6.5 | 6.5 | 6.5 | 6.5 | 6.5 | 6.5 | 0.0 | 30.0 | 6.5 | 6.5 | 6.5 | 0.0 | 0.0 | 6.5 | 6.5 |
| Weight average molecular weight (Mw) | 12,000 | 13,000 | 13,000 | 15,000 | 15,000 | 15,000 | 13,000 | 13,000 | 12,000 | 12,000 | 13,000 | 12,000 | 12,000 | 10,000 | 13,000 | 14,000 | 12,000 | 12,000 |

Paint Composition

A paint composition shown in Example 1 was produced as described below. 40 parts by mass of xylene and further a pigment in the mass ratio shown in Table 2 were added to 500 parts by mass of the solution A-1 (A-1, 100 parts by mass), and the mixture was dispersed in a bead mill until the particle size measured by a grind meter was 10 $\mu$m or less, thereby obtaining a pigment dispersion. The solution B-2 was added to the pigment dispersion so that the amount of the (meth)acrylic resin B-2 was 100 parts by mass, and then cyclohexane, methyl ethyl ketone, and butyl acetate solvents were mixed in the ratios shown in Table 2 to obtain the paint composition shown in Example 1.

The components shown in Tables 2 and 3 were mixed by the method shown in Example 1 to thereby obtain paint compositions shown in Examples 2 to 21. The ester-based solvent (C2), ketone-based solvent (C3), and alcohol-based solvent (C4) were added to the pigment dispersion.

The components shown in Table 3 were mixed by the method shown in Example 1 to obtain paint compositions shown in Comparative Examples 1 to 5. The ester-based solvent (C2), ketone-based solvent (C3), and alcohol-based solvent (C4) were added to the pigment dispersion.

Evaluation Method

Storage Stability (Paint Stability) Test

The paint stability of the paint compositions produced in the Examples and Comparative Examples was evaluated for the following items.

The viscosity (flow time) of the paint compositions prepared in the Examples and Comparative Examples was measured with a Ford cup (No. 4, 25°C). The paint compositions were allowed to stand at -5°C and 50°C for 10 days, after which the appearance and viscosity of the paint compositions were evaluated.

Evaluation criteria

A: There was no aggregation or gelation, and the increase in flow time (thickening) compared to the viscosity before the test was within 1 second.

B: There was no aggregation or gelation, and the increase in flow time (thickening) compared to the viscosity before the test was more than 1 second and less than 5 seconds or less.

C: There was no aggregation or gelation, but the increase in flow time (thickening) compared to the viscosity before the test was more than 5 seconds.

D: There was aggregation or gelation, and the increase in flow time (thickening) compared to the viscosity before the test was more than 5 seconds.

Production of Test Coated Plates

30 parts by mass of xylene and 30 parts by mass of toluene were mixed with 100 parts by mass of each of the paint compositions obtained in the Examples and Comparative Examples to prepare solvent compositions for use during coating. The prepared paint compositions are referred to below as diluted paint compositions.

A polypropylene (PP) substrate (10 cm × 10 cm) or an ABS substrate (10 cm × 10 cm) was degreased with isopropyl alcohol to prepare a test plate. The diluted paint compositions prepared above were each spray-coated onto the test plate to a dry film thickness of 10 $\mu$m. On the diluted paint composition layer of the test plate, Retan (registered trademark) PG White (product name, manufactured by Kansai Paint Co., Ltd.) was spray-coated as a colored base paint to a dry film thickness of 50 $\mu$m. Thereafter, the plate was heated in an oven at 80°C for 30 minutes to obtain a test coated plate on which a laminated coating film was formed. Using the test coated plates, various coating film performance tests were carried out as shown below.

Coating Film Performance Tests

The test coated plates prepared as described above were subjected to evaluation tests for the following items.

(1) Initial Adhesion

Cuts were made with a utility knife on the coated surface of each of the test coated plates of the PP and ABS substrates so as to reach the base material, creating a grid pattern of 100 squares (1 mm x 1 mm). Adhesive cellophane tape was adhered onto the surface and rapidly peeled off at 20°C, and then new tape was replaced and peeled off again. This operation was repeated three times in total, and the evaluation was performed according to the following criteria.

Evaluation criteria

A: No peeling occurred even after five repetitions of peeling.
B: Peeling occurred after the fifth peeling operation.
C: Peeling occurred after the fourth peeling operation.
D: Peeling occurred after the first to third peeling operations.

(2) Water Resistance

Each of the test coated plates of the PP and ABS substrates was left to stand in an atmosphere at 25°C for 36 hours and then immersed in warm water at 40°C for 10 days. After changes in the coating film were examined, the adhesion was evaluated by the method shown in (1) according to the following criteria.

A: There was no change in appearance, and no peeling occurred even after five repetitions of peeling.
B: There was no change in appearance, but peeling occurred after the fifth peeling operation.
C: There was no change in appearance, but peeling occurred after the fourth peeling operation.
D: There were blisters, and peeling occurred after the first to third peeling operations.

(3) Gasohol Resistance (Chemical Resistance)

Each of the test coated plates of the PP substrates was immersed in a test liquid of gasoline and ethanol at a weight ratio of 90/10 at 20°C, and the state of the coated surface in terms of swelling and peeling was observed after 120 minutes and evaluated according to the following criteria.

Evaluation criteria

A: There was no abnormality at all.
B: Swelling with a diameter of less than 1 mm or peeling with a diameter of less than 1 mm occurred.
C: Swelling with a diameter of 1 mm or more and less than 3 mm or peeling with a diameter of 1 mm or more and less than 3 mm occurred.
D: Swelling with a diameter of 3 mm or more or peeling with a diameter of more than 3 mm or more occurred.

(4) High-Pressure Car Wash Resistance Test (High-Pressure Washing Resistance)

Cuts were made with a utility knife on the coated surface of each of the test coated plates of the PP substrates so as to reach the base material, creating a grid pattern of 100 squares (1 mm x 1 mm). The coated plate was set so that the distance between the plate and the jet nozzle was 10 cm, the angle was 90°, and the jet water hit the cross-cut portion. Warm water at a temperature of 80°C and a pressure of 80 bar was continuously sprayed thereon for one minute. The state of the coating film after spraying was observed and evaluated according to the following criteria.

A: There was no peeling at all.
B: Less than 1% of the coating film based on the area of the coated plate was peeled off.
C: 1% or more and less than 10% of the coating film based on the area of the coated plate was peeled off.
D: 10% or more of the coating film based on the area of the coated plate was peeled off.

(5) Oil Immersion Resistance Test

A test liquid was prepared based on the alcohol-added fuel liquid for testing specified in ISO 1817. The test liquid contained 25.35 mass% of 2,2,4-trimethylpentane, 42.25 mass% of toluene, 12.68 mass% of diisobutylene, 15.0 mass% of methanol, 4.22 mass% of ethanol, 0.5 mass% of water, and 20 ppm of formic acid. Cuts were made with a utility knife on each test coated plate so as to reach the base material, creating a grid pattern of 100 squares (1 mm x 1 mm). The test coated plates were immersed in the test liquid at 25°C for 120 minutes, after which the coating films were observed for swelling and peeling, and evaluated according to the following criteria.

Evaluation criteria

A: No peeling occurred at all.
B: Peeling or swelling occurred in 1 or more and less than 5 places.
C: Peeling or swelling occurred in 5 or more and less than 10 places.
D: Peeling or swelling occurred in 10 or more places.

Tables 2 and 3 below show the results of the evaluation tests performed in the paint stability test and coating film performance tests in the Examples and Comparatives. The values of the modified polyolefin (A) and the (meth)acrylic resin (B) in Tables 2 and 3 are calculated in terms of solids content.

Table 2

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 |
|---|---|---|---|---|---|---|---|---|---|---|---|---|---|---|---|
| Modified polyolefin (A) | A-1 | 100 | | | | | | 100 | 100 | 100 | 100 | 100 | 100 | 100 | 100 |
| | A-2 | | 100 | | | | | | | | | | | | |
| | A-3 | | | 100 | | | | | | | | | | | |
| | A-4 | | | | 100 | | 50 | | | | | | | | |
| | A-5 | | | | | 100 | 50 | | | | | | | | |
| (Meth)acrylic resin (B) | B-1 | | | | | | | 100 | | | | | | | |
| | B-2 | 100 | 100 | 100 | 100 | 100 | 100 | | | | | | | | |
| | B-3 | | | | | | | | 100 | | | | | | |
| | B-4 | | | | | | | | | 100 | | | | | |
| | B-5 | | | | | | | | | | 100 | | | | |
| | B-6 | | | | | | | | | | | 100 | | | |
| | B-7 | | | | | | | | | | | | 100 | | |
| | B-8 | | | | | | | | | | | | | 100 | |
| | B-9 | | | | | | | | | | | | | | 100 |
| Hydrocarbon-based solvent (C) | Xylene | 160 | 160 | 160 | 160 | 160 | 160 | 160 | 160 | 160 | 160 | 350 | 160 | 160 | 160 |
| | Cyclohexane | 390 | 390 | 390 | 390 | 390 | 390 | 390 | 390 | 390 | 390 | 390 | 390 | 390 | 390 |
| Ketone-based solvent (C3) | Methyl ethyl ketone | 50 | 50 | 50 | 50 | 50 | 50 | 50 | 50 | 50 | 50 | | 50 | 50 | 50 |
| Ester-based solvent (C2) | Butyl acetate | 150 | 150 | 150 | 150 | 150 | 150 | 150 | 150 | 150 | 150 | | 150 | 150 | 150 |
| Alcohol-based solvent (C4) | Isopropyl alcohol | | | | | | | | | | | 10 | | | |
| Pigment | Titanium oxide | 100 | 100 | 100 | 100 | 100 | 100 | 100 | 100 | 100 | 100 | 100 | 100 | 100 | 100 |
| | Carbon black | 5 | 5 | 5 | 5 | 5 | 5 | 5 | 5 | 5 | 5 | 5 | 5 | 5 | 5 |
| | Barium sulfate | 20 | 20 | 20 | 20 | 20 | 20 | 20 | 20 | 20 | 20 | 20 | 20 | 20 | 20 |
| | Talc | 7.5 | 7.5 | 7.5 | 7.5 | 7.5 | 7.5 | 7.5 | 7.5 | 7.5 | 7.5 | 7.5 | 7.5 | 7.5 | 7.5 |

17

| | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 |
|---|---|---|---|---|---|---|---|---|---|---|---|---|---|---|---|---|
| Coating film evaluation | PP | Initial adhesion | A | A | A | A | A | A | A | A | A | A | A | A | A | A |
| | | Water resistance | A | A | A | A | A | A | A | A | A | A | A | A | A | A |
| | | Gasohol resistance | A | A | A | A | B | A | A | A | A | A | A | A | A | A |
| | | High-pressure wash resistance | A | A | A | A | A | A | A | A | A | A | A | A | A | A |
| | | Oil immersion resistance | A | A | A | A | A | A | B | A | A | A | A | A | A | A |
| | ABS | Initial adhesion | A | A | A | A | A | A | A | A | A | A | A | A | B | A |
| | | Water resistance | A | A | A | A | A | A | A | A | A | A | A | A | B | A |
| Paint stability | -5°C | | A | A | A | B | A | A | A | A | A | B | B | A | A | A |
| | 50°C | | A | B | B | B | A | A | A | A | A | B | A | A | A | A |

EP 4 621 015 A1

Table 3

| | | | Ex. 15 | Ex. 16 | Ex. 17 | Ex. 18 | Ex. 19 | Ex. 20 | Ex. 21 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|---|---|
| Solvent-based paint composition | Modified polyolefin (A) | A-1 | 100 | 100 | 100 | 100 | 100 | 100 | 100 | 100 | 100 | 100 | 100 | |
| | | A-6 | | | | | | | | | | | | 100 |
| | (Meth)acrylic resin (B) | B-2 | | | | | | 30 | 850 | | | | | 100 |
| | | B-10 | 100 | | | | | | | | | | | |
| | | B-11 | | 100 | | | | | | | | | | |
| | | B-12 | | | 100 | | | | | | | | | |
| | | B-13 | | | | 100 | | | | | | | | |
| | | B-14 | | | | | 100 | | | | | | | |
| | | B-15 | | | | | | | | 100 | | | | |
| | | B-16 | | | | | | | | | 100 | | | |
| | | B-17 | | | | | | | | | | 100 | | |
| | | B-18 | | | | | | | | | | | 100 | |
| | Hydrocarbon-based solvent (C) | Xylene | 160 | 160 | 160 | 160 | 160 | 1200 | 100 | 160 | 160 | 160 | 160 | 160 |
| | | Cyclohexane | 390 | 390 | 390 | 390 | 390 | 1600 | 100 | 390 | 390 | 390 | 390 | 390 |
| | Ketone-based solvent (C3) | Methyl ethyl ketone | 50 | 50 | 50 | 50 | 50 | | 50 | 50 | 50 | 50 | 50 | 35 |
| | | Methyl isobutyl ketone | | | | | | | 200 | | | | | |
| | Ester-based solvent (C2) | Butyl acetate | 150 | 150 | 150 | 150 | 150 | 150 | 1350 | 150 | 150 | 150 | 150 | 150 |
| | | Amyl acetate | | | | | | | 400 | | | | | |
| | Alcohol-based solvent (C4) | Isopropyl alcohol | | | | | | | | | | | | 15 |
| | Pigment | Titanium oxide | 100 | 100 | 100 | 100 | 100 | 60 | 500 | 100 | 100 | 100 | 100 | 100 |
| | | Carbon black | 5 | 5 | 5 | 5 | 5 | 3 | 25 | 5 | 5 | 5 | 5 | 5 |
| | | Barium sulfate | 20 | 20 | 20 | 20 | 20 | 12 | 100 | 20 | 20 | 20 | 20 | 20 |
| | | T | 7.5 | 7.5 | 7.5 | 7.5 | 7.5 | 4.5 | 38 | 7.5 | 7.5 | 7.5 | 7.5 | 7.5 |

(continued)

| | | | | Ex. 15 | Ex. 16 | Ex. 17 | Ex. 18 | Ex. 19 | Ex. 20 | Ex. 21 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|---|---|---|
| Evaluation results | Coating film evaluation | PP | Initial adhesion | A | A | A | A | A | A | A | A | A | A | A | D |
| | | | Water resistance | A | B | B | A | B | A | A | A | C | A | D | D |
| | | | Gasohol resistance | B | A | A | A | A | A | B | B | D | A | B | D |
| | | | High-pressure wash resistance | B | A | A | B | A | B | B | D | D | A | A | D |
| | | | Oil immersion resistance | B | A | A | B | A | A | B | D | C | D | A | D |
| | | ABS | Initial adhesion | A | A | A | A | A | A | A | C | A | A | A | D |
| | | | Water resistance | A | B | B | A | A | B | A | B | B | A | D | D |
| | Paint stability | -5°C | | A | B | B | A | B | B | B | A | A | A | D | D |
| | | 50°C | | A | B | B | A | B | B | B | A | A | A | D | D |

EP 4 621 015 A1

20

EP 4 621 015 A1

As shown in Tables 2 and 3, it was found that the paint compositions obtained in Examples 1 to 21 exhibited good adhesion to the polyolefin substrate and ABS substrate, as well as excellent storage stability, and the coating films formed on the non-polar substrates had excellent high-pressure washing resistance, gasohol resistance, and oil immersion resistance. The paint composition obtained in Comparative Example 1 did not have a hydroxyl group in the (meth)acrylic resin or an acid value, and did not contain polyfunctional (meth)acrylate; therefore, the coating film had few crosslinking points, was slightly inferior in adhesion to the ABS substrate, and was inferior in high-pressure washing resistance and oil immersion resistance. The paint composition obtained in Comparative Example 2 was slightly inferior in water resistance and oil immersion resistance, and was inferior in gasohol resistance and high-pressure washing resistance because Tg of the (meth)acrylic resin was less than 0°C. The paint composition obtained in Comparative Example 3 was inferior in oil immersion resistance because the (meth)acrylic resin did not contain polyfunctional (meth)acrylate. The paint composition obtained in Comparative Example 4 was inferior in water resistance and paint stability because the hydroxyl value of the (meth)acrylic resin exceeded 150 mgKOH/g. The paint composition obtained in Comparative Example 5 was inferior in both coating film performance and paint stability because Tg of the modified polyolefin was less than -30°C.

The present invention provides an invention with the following aspects.

[1] A paint composition comprising a modified polyolefin (A) and a (meth)acrylic resin (B),

   the modified polyolefin (A) having a glass transition temperature of -30°C or higher,
   the (meth)acrylic resin (B) comprising a polymer of a radically polymerizable compound (b1), and the radically polymerizable compound (b1) comprising polyfunctional (meth)acrylate,
   the (meth)acrylic resin (B) having a glass transition temperature of 0°C or higher, and
   the (meth)acrylic resin (B) having a hydroxyl value of 5 to 150 mgKOH/g.

[2] The paint composition according to [1], wherein the polyfunctional (meth)acrylate is bifunctional and/or trifunctional.
[3] The paint composition according to [1] or [2], wherein the content of the polyfunctional (meth)acrylate in the radically polymerizable compound (b1) is 0.1 to 5 mass%.
[4] The paint composition according to any one of [1] to [3], wherein the radically polymerizable compound (b1) constituting the (meth)acrylic resin (B) comprises at least one of (meth)acrylate having an alkoxymethyl group and (meth)acrylate having an alkoxyethyl group.
[5] The paint composition according to any one of [1] to [4], wherein the total content of the (meth)acrylate having an alkoxymethyl group and the (meth)acrylate having an alkoxyethyl group in the radically polymerizable compound (b1) is 1 to 55 mass%.
[6] The paint composition according to any one of [1] to [5], wherein the (meth)acrylic resin (B) has an acid value of 0.1 to 30 mgKOH/g.
[7] The paint composition according to any one of [1] to [6], wherein the modified polyolefin (A) comprises at least one of an acid-modified polyolefin (a1) and an acid-modified chlorinated polyolefin (a2).
[8] The paint composition according to any one of [1] to [7], wherein the modified polyolefin (A) has an acid value of 4 to 40 mgKOH/g.
[9] The paint composition according to any one of [1] to [8], wherein the modified polyolefin (A) has a weight average molecular weight of 20,000 to 180,000.
[10] The paint composition according to any one of [1] to [9], wherein the (meth)acrylic resin (B) is contained in an amount of 25 to 900 parts by mass per 100 parts by mass of the modified polyolefin (A).
[11] The paint composition according to any one of [1] to [10], which comprises a solvent (C), wherein the solvent (C) comprises a hydrocarbon-based solvent (C1), and the hydrocarbon-based solvent (C1) is contained in an amount of 200 to 3,000 parts by mass per 100 parts by mass of the modified polyolefin (A) .
[12] The paint composition according to any one of [1] to [11], which comprises a solvent (C), wherein the solvent (C) comprises a hydrocarbon-based solvent (C1) and further comprises at least one of an ester-based solvent (C2) and a ketone-based solvent (C3).
[13] The paint composition according to [11] or [12], wherein the solvent (C) further comprises an alcohol-based solvent (C4).
[14] A primer paint for a polyolefin substrate, comprising the paint composition according to any one of [1] to [13].
[15] A primer paint for an ABS substrate, comprising the paint composition according to any one of [1] to [13].

Claims

1. A paint composition comprising a modified polyolefin (A) and a (meth)acrylic resin (B),

the modified polyolefin (A) having a glass transition temperature of -30°C or higher,
the (meth)acrylic resin (B) comprising a polymer of a radically polymerizable compound (b1), and the radically polymerizable compound (b1) comprising polyfunctional (meth)acrylate,
the (meth)acrylic resin (B) having a glass transition temperature of 0°C or higher, and
the (meth)acrylic resin (B) having a hydroxyl value of 5 to 150 mgKOH/g.

2. The paint composition according to claim 1, wherein the polyfunctional (meth)acrylate is bifunctional and/or trifunctional.

3. The paint composition according to claim 1, wherein the content of the polyfunctional (meth)acrylate in the radically polymerizable compound (b1) is 0.1 to 5 mass%.

4. The paint composition according to claim 1, wherein the radically polymerizable compound (b1) constituting the (meth)acrylic resin (B) comprises at least one of (meth)acrylate having an alkoxymethyl group and (meth)acrylate having an alkoxyethyl group.

5. The paint composition according to claim 1, wherein the total content of the (meth)acrylate having an alkoxymethyl group and the (meth)acrylate having an alkoxyethyl group in the radically polymerizable compound (b1) is 1 to 55 mass%.

6. The paint composition according to claim 1, wherein the (meth)acrylic resin (B) has an acid value of 0.1 to 30 mgKOH/g.

7. The paint composition according to claim 1, wherein the modified polyolefin (A) comprises at least one of an acid-modified polyolefin (a1) and an acid-modified chlorinated polyolefin (a2).

8. The paint composition according to claim 1, wherein the modified polyolefin (A) has an acid value of 4 to 40 mgKOH/g.

9. The paint composition according to claim 1, wherein the modified polyolefin (A) has a weight average molecular weight of 20,000 to 180,000.

10. The paint composition according to claim 1, wherein the (meth)acrylic resin (B) is contained in an amount of 25 to 900 parts by mass per 100 parts by mass of the modified polyolefin (A) .

11. The paint composition according to claim 1, which comprises a solvent (C), wherein the solvent (C) comprises a hydrocarbon-based solvent (C1), and the hydrocarbon-based solvent (C1) is contained in an amount of 200 to 3,000 parts by mass per 100 parts by mass of the modified polyolefin (A).

12. The paint composition according to claim 1, which comprises a solvent (C), wherein the solvent (C) comprises a hydrocarbon-based solvent (C1) and further comprises at least one of an ester-based solvent (C2) and a ketone-based solvent (C3).

13. The paint composition according to claim 11, wherein the solvent (C) further comprises an alcohol-based solvent (C4).

14. A primer paint for a polyolefin substrate, comprising the paint composition according to any one of claims 1 to 13.

15. A primer paint for an ABS substrate, comprising the paint composition according to any one of claims 1 to 13.

## INTERNATIONAL SEARCH REPORT

| International application No. |
|---|
| **PCT/JP2023/040932** |

### A. CLASSIFICATION OF SUBJECT MATTER

*C09D 5/00*(2006.01)i; *C09D 123/28*(2006.01)i; *C09D 123/30*(2006.01)i; *C09D 133/00*(2006.01)i
FI:  C09D5/00 D; C09D123/28; C09D123/30; C09D133/00

According to International Patent Classification (IPC) or to both national classification and IPC

### B. FIELDS SEARCHED

Minimum documentation searched (classification system followed by classification symbols)

C09D5/00; C09D123/28; C09D123/30; C09D133/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-26768 A (MITSUBISHI CHEMICAL HOLDINGS CORP.) 21 February 2019 (2019-02-21) <br> example 3 | 1-3, 6-13 |
| A | example 3 | 4-5, 14-15 |
| A | WO 2022/054727 A1 (TOYOBO CO., LTD.) 17 March 2022 (2022-03-17) <br> entire text, all drawings | 1-15 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 December 2023** | **09 January 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/040932**

| Patent document cited in search report | | | Publication date (day/month/year) | Patent family member(s) | Publication date (day/month/year) |
|---|---|---|---|---|---|
| JP | 2019-26768 | A | 21 February 2019 | (Family: none) | |
| WO | 2022/054727 | A1 | 17 March 2022 | EP 4212595 A1 entire text, all drawings KR 10-2023-0066429 A TW 202223044 A | |

Form PCT/ISA/210 (patent family annex) (January 2015)

**EP 4 621 015 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022054727 A

- JP 2002201236 A

**Non-patent literature cited in the description**

- **KYOZO KITAOKA**. New Polymer Bunko 7, Introduction to Synthetic Resins for Paints. Polymer Publishing Association, 1997, 168-169